# EUROPEAN PATENT APPLICATION

(11) **EP 4 571 693 A1**
(43) Date of publication of application: **18.06.2025**
(21) Application number: 23307220.6
(22) Date of filing: 15.12.2023
(51) Int. Cl.: G07F 17/32

(54) **METHOD, SYSTEM, AND COMPUTER PROGRAM FOR IMPROVING DIGITAL INSTANT GAMES AND DIGITAL EXTENSIONS OF GAMES**

(71) Applicant: FDJ GAMING SOLUTIONS FRANCE, 92100 Boulogne-Billancourt (FR)
(72) Inventor: BECKER, Sebastian, 92650 BOULOGNE BILLANCOURT (FR); MEYNIEUX, Eric, 92650 BOULOGNE BILLANCOURT (FR)
(74) Representative: Casalonga

(57) **Abstract**

At least one embodiment of a method for a computer game wherein a result of a current step is determined as a function of a predetermined behavior that is unknown from a player at the time of playing. After receiving, from a game engine, an access token request for accessing a result of the current step, the access token request comprising a token of a game access and a reference to the current step, the token of the game access and the reference to the current step are securely stored. A single-use access token is then generated and transmitted, the generated single-use access token being stored in relation to the stored token of the game access and reference to the current step. Upon request, the validity of the single-use access token is confirmed and the stored token of the game access and reference to the current step are securely marked as played.

## Description

### FIELD OF THE DISCLOSURE

The present disclosure relates generally to digital games and in particular to improving digital multi-step games, such as digital multi-step extensions of physical lottery scratch tickets.

### BACKGROUND OF DISCLOSURE

Recent developments in the lottery scratch tickets show a great success for hybrid games in which a classic scratch card experience is extended by a digital game.

According to the hybrid games, a result associated with a scratch ticket may lead to participation in a second digital game (also denoted an extension, an add-on, or an additional game). The digital game may be offered to players according to whether their ticket is a winner or a loser and, if so, their winning rank. In this way, a digital game can be offered, for example, to all players with a losing ticket, or to all players with a winning ticket except for the highest rank. Participation in such a second game can be carried out on the player's personal equipment (such as a smart cell phone (or smartphone), a tablet or a computer) or on a gaming terminal made available to players at certain points of sale. To enable scratch card games to be managed, each ticket carries a validation code which enables a central system to be interrogated to find out whether the ticket is a winner or not, and what result is associated with it. Such information is generally stored in a printer file. The validation code is printed in a hidden area, in the form of a barcode and/or a number.

Regarding the digital games (or digital extension), there exist solutions using random number generators (RNG) that are used to determine the outcome of the game, during the game, which cause variance in the results, since it may lead to an increase or decrease in a win associated with a first game (e.g., a scratch game) or to (additional) independent winnings. For example, the scratch tickets and the digital game may be of the "Double or Quits" type ("Double or Quits" is a trademark).

The use of a random number generator for determining the outcome of the game makes it impossible to predetermine the outcome of the digital game before the game is played. However, such solutions induce variance in the winning amount returned to players, which may be problematic to some lotteries. Indeed, using a RNG to determine the results of the digital extension of a scratch card game might cause fluctuations of the final Return To Player rate (RTP) of a scratch game, which cannot be foreseen or controlled by the lottery. Accordingly, many lotteries prefer to carry out scratch games having a fixed RTP, in particular for controlling the risk, to make sure they are not exposed suddenly to a huge deviation from a mathematical model used by a RNG to produce an equal distribution of results over time (it being noted that a RNG may produce an unbalanced result distribution during a limited period of time).

In addition, it is observed that some lottery regulations forbid licensed lotteries to use an RNG when determining winnings of instant games and/or require a full predetermine outcome at the time of purchasing of instant tickets providing accesses to digital extensions.

According to other solutions, the game outcome for a digital extension of a scratch ticket game is predetermined. By predetermining the results, a lottery is aware of how many winning results are in play and how many potential winners exist. However, such solutions leave little room for customer interaction as the final result is known when the player enters the digital game. In addition, a potential issue with predetermined results of an interactive multi-step game is that someone may access to the final outcome before playing, that is to say before making all decisions and adapt their decision accordingly. Another problem is that some games (e.g., Double or Quits) cannot have known final results before the games are played.

In view of the foregoing there is a need for digital instant games or for digital extensions of classic physical games, in particular for digital extensions in which a player may reuse or invest initial winnings in a second stage that is played online, wherein a RTP and a risk level of the games may be fully controlled, while providing players with a pleasant gaming experience and while limiting the risk of fraud.

### SUMMARY OF THE DISCLOSURE

The present disclosure has been devised to address one or more of the foregoing concerns.

According to a first aspect of the disclosure, there is provided a method for a computer game wherein a result of a current step of the computer game is determined as a function of a predetermined game behavior, the predetermined game behavior being unknown from a player at the time of playing at the current step, the method comprising, in an authentication module,
receiving, from a game engine module, an access token request for accessing a result of the current step, the access token request comprising a token of a game access and a reference to the current step;
securely storing the token of the game access and the reference to the current step;
generating and transmitting a single-use access token, the generated single-use access token being stored in relation to the stored token of the game access and reference to the current step; and
upon request, from a result management module, different from the game engine module and from the authentication module, confirming the validity of the single-use access token and marking securely the stored token of the game access and reference to the current step as played.

Accordingly, the method of the disclosure makes it possible to limit a risk of fraud while enabling a full control of a RTP and of a risk level of the games and providing players with a pleasant gaming experience.

According to some embodiments, the computer game is a multi-step computer game, the result of the current step being a right to access a next step of the multi-step computer game.

Still according to some embodiments, the token of the game access is a validation code of a scratch ticket.

Still according to some embodiments, securely storing the token of the game access and the reference to the current step comprises appending the token of the game access and the reference to the current step to a signed chain.

According to a second aspect of the disclosure, there is provided a method for a computer game wherein a result of a current step of the computer game is determined as a function of a predetermined game behavior, the predetermined game behavior being unknown from a player at the time of playing at the current step, the method comprising, in a result management module,
receiving, from a game engine module, a request for the result of the current step, the received request comprising a single-use access token;
requesting an authentication module to verify the validity of the single-use access token, the authentication module being different from the game engine module and from the result management module, and
if the single-use access token is valid, determining and transmitting the result of the current step to the game engine module.

Accordingly, the method of the disclosure makes it possible to limit a risk of fraud while enabling a full control of a RTP and of a risk level of the games and providing players with a pleasant gaming experience.

According to some embodiments, the request for the result of the current step further comprises a token of the game access, the method further comprising obtaining a predetermined game behavior associated with the token of the game access.

Still according to some embodiments, the predetermined game behavior is obtained from a result file associating predetermined game behaviors with tokens of game accesses.

Still according to some embodiments, the method further comprises obtaining an index corresponding to the ticket token, wherein the predetermined game behavior is obtained from a scrambled list of behaviors, using the obtained index.

Still according to some embodiments, the method further comprises determining whether a game behavior has been assigned to the ticket token and, if not any game behavior has been assigned to the ticket token, obtaining a game behavior of a predetermined list of game behaviors and assigning the obtained game behavior to the ticket token.

Still according to some embodiments, the ticket token is associated with a winning level and the predetermined list of game behaviors is selected as a function of the winning level.

Still according to some embodiments, the request for the result of the current step further comprises a reference to the current step, determining the result of the current step comprising determining the result of the current step as a function of the obtained predetermined game behavior and of the current step.

Still according to some embodiments, the computer game is a multi-step computer game, the result of the current step being a right to access a next step of the multi-step computer game.

According to a third aspect of the disclosure, there is provided a method for a computer game wherein a result of a current step of the computer game is determined as a function of a predetermined game behavior, the predetermined game behavior being unknown from a player at the time of playing at the current step, the method comprising, in a game engine module,
requesting, to an authentication module, an access token for accessing a result of the current step, the access token request comprising a token of a game access and a reference to the current step;
in response to the access token request, receiving a single-use access token;
requesting, to a result management module different from the authentication module and from the game engine module, the result of the current step, the request for the result comprising the single-use access token; and
in response to requesting the result, receiving the result of the current step from the result management module.

Accordingly, the method of the disclosure makes it possible to limit a risk of fraud while enabling a full control of a RTP and of a risk level of the games and providing players with a pleasant gaming experience.

According to a fourth aspect of the disclosure, there is provided a method for generating a computer game result file for a computer game accessible to players through game accesses, the method comprising,
obtaining a digital prize structure description, the digital prize structure description comprising a description of a distribution of winnings of the computer game according to game accesses;
obtaining tokens of game accesses; and
generating, based on the received digital prize structure description, a file associating predetermined game behaviors with the tokens of the game accesses or with items of information associated with the tokens of the game accesses.

Accordingly, the method of the disclosure makes it possible to limit a risk of fraud while enabling a full control of a RTP and of a risk level of the games and providing players with a pleasant gaming experience.

According to other aspects of the disclosure, there is provided a device configured for carrying out each of the steps of the method described above and a non-transitory computer-readable medium storing a program which, when executed by a microprocessor or computer system causes the microprocessor or computer system to perform each step of the method described above.

These aspects of the disclosure have advantages similar to those mentioned above.

At least parts of the methods according to the disclosure may be computer implemented. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present disclosure may take the form of a computer program product embodied in any tangible medium of expression having computer usable program code embodied in the medium.

Since the solutions of the present disclosure can be implemented in software, the solutions of the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g., a microwave or RF signal.

### BRIEF DESCRIPTION OF THE DRAWINGS

Further advantages of the present disclosure will become apparent to those skilled in the art upon examination of the drawings and detailed description. Embodiments of the disclosure will now be described, by way of example only, and with reference to the following drawings, in which:
**Figure 1** illustrates an example of an environment in which some embodiments of the disclosure can be implemented;
**Figure 2** illustrates an example of steps of a method for accessing a digital game, for example from a scratch ticket;
**Figure 3** illustrates an example of steps in a digital game for managing the winnings of a digital game, according to some embodiments of the disclosure;
**Figure 4****,** comprising Figures 4a, 4b, and 4c, illustrates an example of steps for obtaining securely a predetermined result of a current step of a digital game, using a token associated with a ticket, according to some embodiments of the disclosure;
**Figure 5** illustrates an example of steps for generating a digital result file according to some embodiments of the disclosure; and
**Figure 6** is a schematic block diagram of a computing device for implementation of one or more embodiments of the disclosure.

### DETAILED DESCRIPTION OF THE DISCLOSURE

According to some embodiments of the disclosure, a digital game, or a digital extension of a physical game such as a scratch ticket game, makes it possible to avoid determining randomly the outcome of the digital game (or digital extension) while providing the possibility for a player to experience a game, in particular a multi-step game, where the player may have several choices in cascade. These embodiments enable a lottery to implement a game having a controlled RTP throughout the full game, as well as to provide a full control on prize levels in each of the digital stages or steps of the game. In addition, such embodiments of the disclosure ensure a high level of protection against fraud in the context of an interactive multi-steps game.

Still according to some embodiments, a path for the digital game or the digital extension of a physical game (e.g., a scratch ticket game) is provided (instead of providing a predetermined prize as done in the prior art). This path makes it possible to access a pool of stories (or game behaviors), a story being associated with each game access (for example, each electronic ticket (e-ticket) or each ticket, like scratch tickets)) and defining steps of the digital game or digital extension for every possible player interaction that may be made. By predetermining these steps and the number of how many stories are issued, with which outcome, a lottery has a full control of the final prize structure and the outcome of the digital extension. As a player does not know, at the time of buying a ticket or an e-ticket, which story was assigned to this ticket or e-ticket, the entertainment value during the play of the digital extension is similar to the one based on a RNG solution.

At the lottery's end, it is possible to control the risk, on a similar way as for any classic scratch card games, since the outcome is fully predetermined for all steps at the setting up (or printing) stage (without players being aware of the outcome at the time of acquiring tickets). In addition, the solution makes multi-step extensions compatible with classic scratch cards with a predetermined outcome (i.e., without the usage of RNGs) and keeps the entertainment factor at a high level.

When playing a digital game or a digital extension of a scratch ticket game according to some embodiments of the disclosure, a player may simply interact with the game through a sequence of decisions, for example through yes or no inputs or through more complex inputs, defining a decision tree. Instead of using an engine based on a RNG to determine the results of each decision and the impact to the game flow, a particular result file (also referred to as the second printer file if it is generated by a ticket printer or the digital result file, in the following) may be created during the setup of the game (for example the printing of the tickets if tickets are printed). This file is used to store stories (or game behaviors), a story being assigned to each e-ticket or ticket, for example using a ticket key (that may be a validation code or the result of a conversion of a validation code).

Therefore, according to some embodiments of the disclosure, once a player decides to engage in a digital extension, the corresponding game engine is not querying a RNG for outcomes of the decision, but looks up thru a secured method to the decision results in the story associated with the e-ticket or the ticket. The predetermined results of the story are revealed step by step as decisions are taken by the player in the game. Accordingly, the final outcome of the game is not known until the player has taken all decisions on the path decided during the game to reach the end of the game.

Due to the fact that the lottery has full control about how many stories are assigned during setup to how many tickets, the lottery can fully control the RTP and the risk level of the game.

Still according to some embodiments of the disclosure, predetermining the outcome of a digital extension of a scratch ticket game is done on a ticket basis at the ticket print time.

For the sake of illustration, the following description is based on a digital extension of a scratch ticket game. However, it is to be understood that embodiments of the disclosure may be used in many digital instant games.

To minimize the complexity of the items of information which need to be stored with each scratch ticket in a secure file and to avoid having to implement any game intelligence in the printer systems, the lottery may provide the printer with a pool of game stories which should be distributed during the printing time across the winning tickets. This means that beside a paper prize structure for the tickets, a digital prize structure is needed.

Tables 1 to 4 in the Appendix illustrate an example of a scratch ticket game comprising a multi-step digital extension, in which 3 million scratch tickets are sold, each ticket being sold 3 €, and the total prize amount is 6.291.280 € (i.e., the RTP is 69,90 %). According to this example, the multi-step digital extension comprises 4 steps of the win or lose type, thus defining 5 stories (or game behaviors).

Table 1 illustrates the 5 stories denotes A, B, C, D, and E. As illustrated, these stories are defined as follows:
- story E corresponds to a loss at step 1,
- story D corresponds to a win at step 1 and a loss at step 2,
- story C corresponds to a win at steps 1 and 2 and a loss at step 3,
- story B corresponds to a win at steps 1, 2, and 3 and a loss at step 4, and
- story A corresponds to a win at steps 1, 2, 3, and 4.

Table 2 in the Appendix provides an example of a paper prize structure. According to this example, the winning scratch tickets are divided into seven classes:
- a first class of tickets comprises two winning tickets each associated with a prize of 50.000 €,
- a second class of tickets comprises 32 winning tickets each associated with a prize of 1.000 €,
- a third class of tickets comprises 496 winning tickets each associated with a prize of 100 €,
- a fourth class of tickets comprises 7.296 winning tickets each associated with a prize of 50 €,
- a fifth class of tickets comprises 40.000 winning tickets each associated with a prize of 20 €,
- a sixth class of tickets comprises 264.992 winning tickets each associated with a prize of 10 €, and
- a seventh class of tickets comprises 458.992 winning tickets each associated with a prize of 5 E.

2.228.190 tickets are losing tickets.

Table 3 in the Appendix provides an example of a digital prize structure associated with the paper prize structure illustrated in Table 2 and the stories illustrated in Table 1. For the sake of simplicity, the digital prizes are not correlated with the paper prizes in this example however, it should be understood that all or some of the digital prizes may depend on all or some of the paper prizes, according to other games.

According to this example, no access to the digital extension is provided to the two winners belonging to class 1.

Regarding the other classes, the players may access to the digital extension.

The owners of the scratch tickets belonging to class 2 may access a first step of the digital extension. The owners of the scratch tickets belonging to class 2, that are associated with story E, are losers at this first step. As illustrated, the factor to be applied to the potential win of class 2 (set to 1.000 € in this example), regarding story E, is zero. Therefore, they do not win any prize. According to this example, 50 % of the scratch tickets belonging to class 2 are associated with story E.

The owners of the scratch tickets belonging to class 2, that are associated with story A, B, C, or D, win at the first step of the digital extension. Therefore, they may access a second step. The owners of the scratch tickets belonging to class 2, that are associated with story D, are losers at this second step. As illustrated, the factor to be applied to the potential win of class 2, regarding story D, is two. Therefore, the owners of the scratch tickets belonging to class 2, that are associated with story D, win a prize of 2.000 € (i.e., 2 x 1.000 €). According to this example, 25 % of the scratch tickets belonging to class 2 are associated with story D.

The owners of the scratch tickets belonging to class 2, that are associated with story A, B, or C, win at the first and second steps of the digital extension. Therefore, they may access a third step. The owners of the scratch tickets belonging to class 2, that are associated with story C, are losers at this third step. As illustrated, the factor to be applied to the potential win of class 2, regarding story C, is four. Therefore, the owners of the scratch tickets belonging to class 2, that are associated with story C, win a prize of 4.000 € (i.e., 4 x 1.000 €). According to this example, 12,5 % of the scratch tickets belonging to class 2 are associated with story C.

The owners of the scratch tickets belonging to class 2, that are associated with story A, or B, win at the first, second, and third steps of the digital extension. Therefore, they may access a fourth step. The owners of the scratch tickets belonging to class 2, that are associated with story B, are losers at this fourth step. As illustrated, the factor to be applied to the potential win of class 2, regarding story B, is eight. Therefore, the owners of the scratch tickets belonging to class 2, that are associated with story B, win a prize of 8.000 € (i.e., 8 x 1.000 €). According to this example, 6,25 % of the scratch tickets belonging to class 2 are associated with story B.

Finally, the owners of the scratch tickets belonging to class 2, that are associated with story A, win at the first, second, third, and fourth steps of the digital extension. Therefore, the owners of the scratch tickets belonging to class 2, that are associated with story A, are winners of the digital extension. As illustrated, the factor to be applied to the potential win of class 2, regarding story A, is sixteen. Therefore, the owners of the scratch tickets belonging to class 2, that are associated with story A, win a prize of 16.000 € (i.e., 16 x 1.000 €). According to this example, 6,25 % of the scratch tickets belonging to class 2 are associated with story A.

The same applies to the other classes with different prize amounts, as illustrated Table 3.

In the digital extension game, an animation may be steered by the game platform to the result of the story of the ticket (which is predetermined at setting up). As the players do not know the story assigned to their ticket, they have the same game experience and outcome as if the game engine based on a RNG would decide during play, but the lottery would know in advance how main possible combination could be won. The story could also store full game paths which might be required for other games, whereby the story tells the game engine not only the result but also step by step scenario to the game.

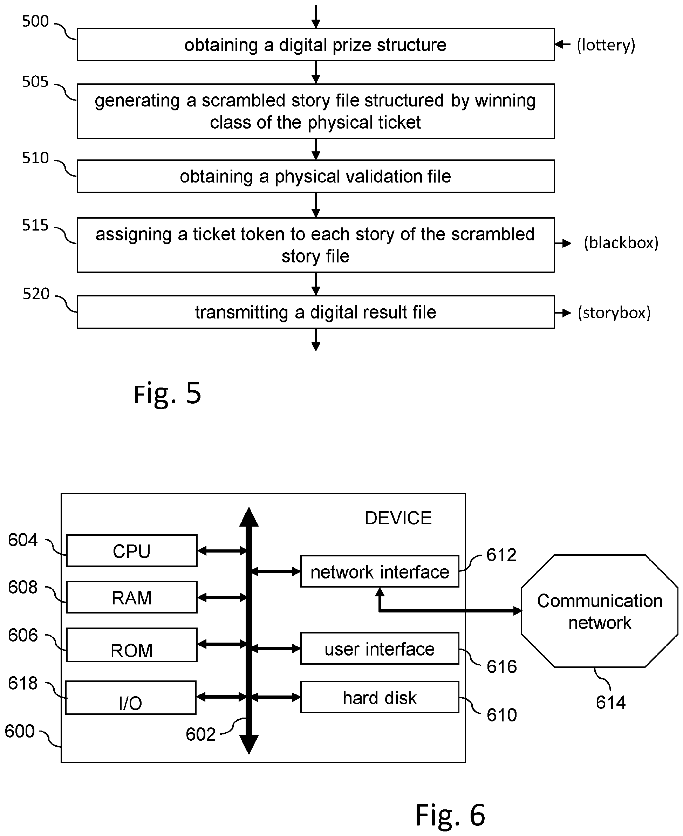

According to particular embodiments wherein a digital extension is associated with a scratch ticket game, two separate files are produced during the printing process of the scratch tickets:
- a common printer file (also denoted the printer file) for the lottery Instant Ticket Management System (ITMS). The format and structure of this printer file may be the same as the one currently used by the lotteries and
- a digital result file with the outcome scenario, or stories, of the digital extension of the game (digital file). This new file contains the distribution of the predetermined stories across the tickets. This distribution is carried out according to a prize structure defined by the lottery, for example according to the previous example, by associating story identifiers with ticket tokens, wherein a ticket token may be a validation code (or ticket identifier) or a result of a transformation of the validation code. For the sake of illustration, the digital result file may comprise Table 4 in the Appendix, which associates a ticket token with a story identifier. Therefore, according to some embodiments, the distribution of the stories among the tickets is done by the printer at the time of printing the tickets, using the digital prize structure provided by the lottery. It is stored in a digital result file that is kept secret. According to other embodiments, the distribution of the stories among the tickets is done by a third party at the time of setting up the game. Figure 5 illustrates an example of steps for generating a digital result file.

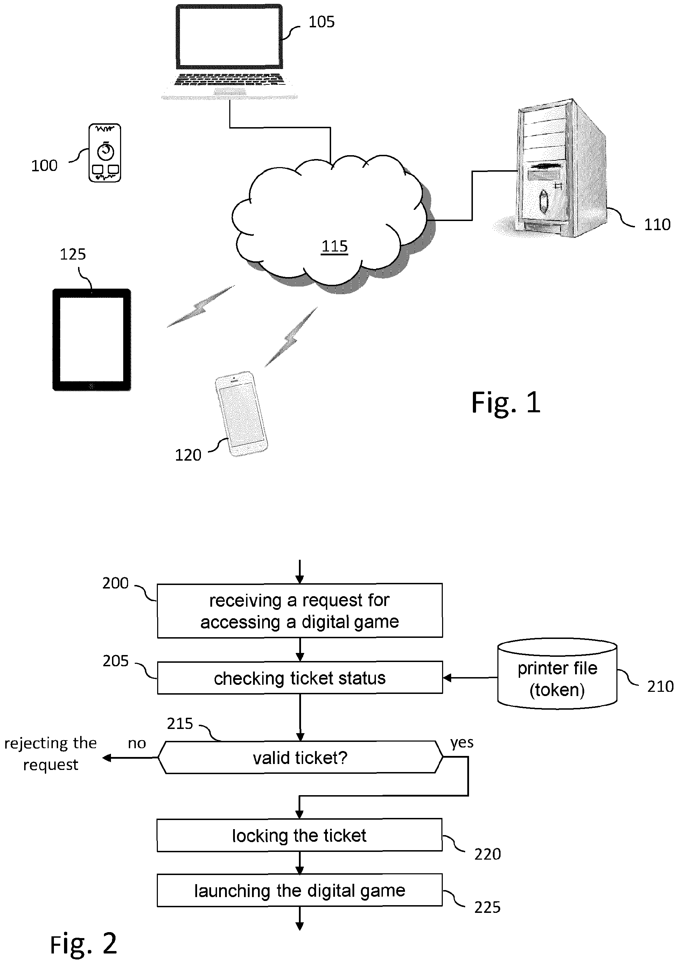

**Figure 1** illustrates an example of a particular environment in which some embodiments of the disclosure can be implemented. As depicted, a user may purchase a physical game ticket 100, for example at a retail location also called a "point of sale" (POS). It typically comprises a validation code (that identifies the ticket). The validation code is used to determine whether the player has won or not and to establish a status. For illustration, after being validated, a ticket could be in a payable state, already paid, or blocked, for instance, if it has been reported stolen.

To claim payment of a winning ticket, the player can go to a point of sale equipped with a terminal 105 connected to a server 110 of a game's managing entity, via a communication network 115. The terminal 105 includes input means such as a keyboard or reading means such as a scanner to obtain the ticket's validation code. It also includes means to send requests to the server 110, particularly requests containing ticket validation codes. Thus, after reading the validation code from a ticket, the terminal 105 sends a request to the server 110, including the validation code, to find out the amount of the prize and the ticket's status. In response, the terminal receives the information about the winnings and status. If applicable, the sales point can then pay the winnings to the player.

On the other hand, if the result of the physical game (paper scratch ticket) makes it possible, a player may use a personal device, such as a smartphone 120, a tablet 125, or a personal computer (not depicted) to access a digital extension of the scratch game. For this purpose, players can use a specific application or a web interface. According to particular embodiments, the digital extension game modifies the winnings indicated by the considered scratch ticket, for example by multiplying the initial monetary winning with a given factor depending on a class of scratch tickets and on a story associated with the tickets, as described above. It could involve, for example, an interactive game like "Double or Quit".

After having transmitted the results of the considered ticket, or simultaneously, the server 110 may send an indication that an opportunity is offered to the player (i.e., the holder of the considered ticket) to participate in a digital extension game, for example a multi-step digital extension game. The player may then start playing interactively using the specific application or web interface. Such an opportunity could also be offered to a player at a point of sale. According to some embodiments, the launch of the digital extension game is performed automatically when a player checks the ticket on the specific application or web interface. According to other embodiments, the scratch tickets are replaced by virtual tickets or game accesses.

**Figure 2** illustrates an example of steps of a method for accessing a digital game, for example from a scratch ticket, for instance as a result of the scratch ticket. For the sake of illustration, the steps illustrated in Figure 2, or some of these steps, may be implemented in a server of a lottery, for example in an Instant Ticket Management System.

As illustrated, a first step (step 200) is directed to receiving a request for accessing a digital game. Such a request may be received from a personal device, for example a smartphone of the player, from a terminal located in a point of sale, or from any processing device running specific application or web interface. According to some embodiments, the request comprises a validation code of the scratch ticket that is used to request the access to the digital game (as a digital extension game) or any other ticket identifier, preferably any unique ticket identifier, the ticket being a physical ticket or a virtual ticket..

Next, the status of the ticket is checked (step 205), for example to determine whether the ticket is in a payable state, already paid, blocked, or reported as stolen. As described above, the status of the ticket may be determined as a function of a validation code. Such a check may be determined by the ITMS using a standard printer file, for example the printer file 210 preloaded in the ITMS. According to some embodiments, a token associated with the ticket's validation code is obtained from the printer file to improve security. Such a token may be the validation code itself, a transform of the validation code, or another unique value.

Next, a test is carried out to determine whether the ticket is valid or not (step 215). If the ticket is not valid, for example if it is in an already paid state, blocked, or reported as stolen, the request for accessing digital game is rejected. On the contrary, if the ticket is valid, it is locked (step 220), i.e., it is set in a locked state, meaning that it cannot be used to trigger any other action.

Next, the digital game is launched (step 225).

According to other embodiments, a digital game is directly launched using a game access having its own token (i.e., the digital game is not launched from any previous physical game).

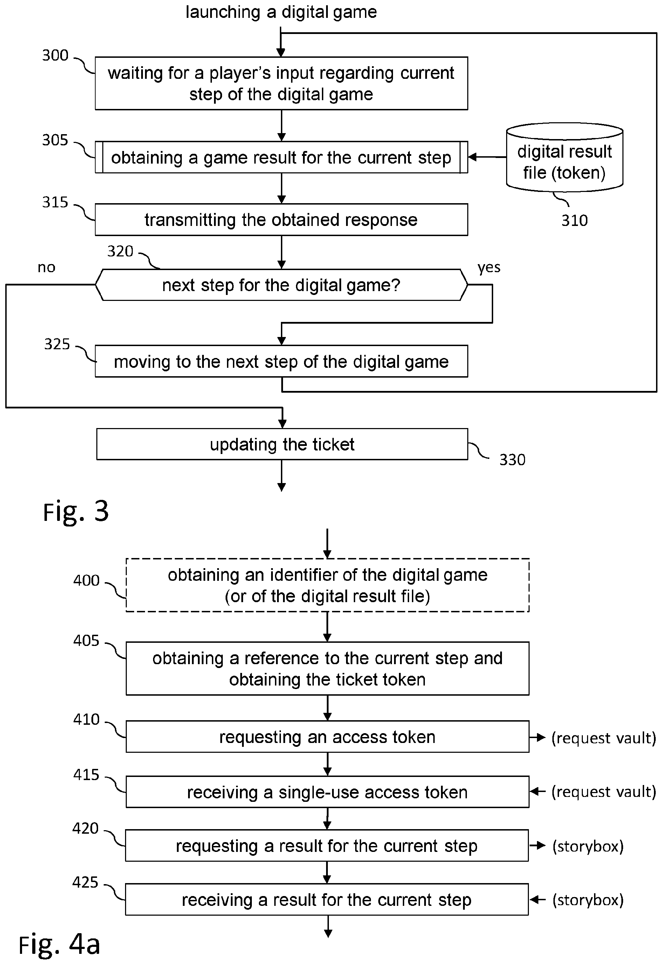

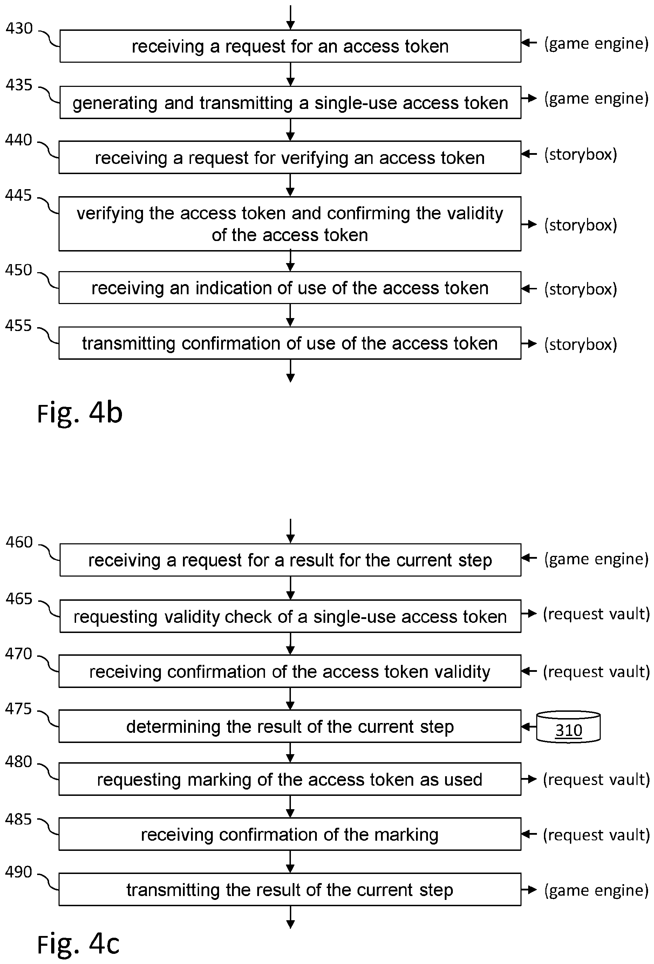

**Figure 3** illustrates an example of steps in a digital game for managing the winnings of a digital game, according to some embodiments of the disclosure. For the sake of illustration, the steps illustrated in Figure 3 may be implemented in one or several servers of a lottery, in full or in part. According to some embodiments and as described with reference to Figure 4, some sub-steps of the steps illustrated in Figure 3 are carried out in specific modules and/or in specific servers to improve the security level of the method for managing the winnings.

After having launched the digital game (or digital extension), an input from the player is awaited for the current step of the digital game (step 300). As described above, such a response may consist in a simple yes or no input or may be a more complex selection among several choices.

Next, after having received an input from the player, a result of the current step is obtained (step 305). While such a response seems to depend on the received player's input and on a random number, from the point of view of the player, it is predetermined, as described above. Accordingly, the result is a predetermined result that may be obtained from a digital result file, e.g., from the digital result file 310. Such a digital result file is preferably encrypted and not directly accessible to the game engine module used to play the digital game. Accordingly and for the sake of security, step 305 may involve hidden sub-steps (e.g., sub-steps executed in a storybox module), as described with reference to Figure 4. It is important to note that a result of the digital game at the current step can only be obtained after playing the current step, that is to say after the player has provided the game engine with an input.

The obtained response is then transmitted to the player (step 315). In addition, if the digital game comprises a next step, the obtained response is used to determine whether the player may access the next step (step 320).

If the digital game comprises a next step and if the player is allowed to access this next step, the next step is selected and the algorithm loops on step 300.

On the contrary, if the digital game does not comprise any next step or if the player is not allowed to access a next step, the status of the ticket is updated (step 330). Updating the status of the ticket may comprise setting the status of the ticket in a payable state so that the player may claim the winning, if any.

**Figure 4****,** comprising Figures 4a, 4b, and 4c, illustrates an example of steps for obtaining securely a predetermined result of a current step of a digital game, using a token associated with a ticket, according to some embodiments of the disclosure.

According to the example illustrated in Figure 4, obtaining securely a predetermined result of a current step of a digital game involves three different modules, the game engine or game engine module (that steps are illustrated in Figure 4a), a request vault module or authentication module (that steps are illustrated in Figure 4b), and a storybox module or result management module (that steps are illustrated in Figure 4c). This makes it possible to control the access to the digital result file containing the predetermined results: access to the digital result file is only given to the storybox module, with a token specific to each step of the game and to each ticket, which is only generated on a transactional level after the step is marked as played. A module may be a software or a hardware element configured to carry out one or more functions.

For the sake of illustration, an optional blackbox module may be developed by the printer of the tickets (or by a third party setting up the digital game) so that the lottery or any IT operator cannot access to relevant items of information in a digital result file. For the sake of illustration, such a blackbox module may convert a ticket token into a ticket key (and conversely) so as to establish a link between the validation code and a story associated with the ticket key in a digital result file. A ticket key may be, for example, a story index in a scrambled list of stories.

As illustrated in Figure 4a, illustrating steps carried out by the game engine, the game engine obtains a reference or an identifier of the digital game or a reference to the digital result file, if not already obtained, and obtains a reference to the current step (i.e., the last step played by the player, whose result is requested) and the ticket token, for example a validation code that is printed on the ticket under the scratch zone (steps 400 and 405). Next, the game engine requests, to the request vault module, an access token (step 410). According to the illustrated example, the request for the access token comprises the ticket token previously obtained, that is a key to access the digital result file, and a reference to the current step of the game.

In response to the request for an access token, the game engine receives the requested access token (step 415) or a request rejection message. According to some embodiments (and as described with reference to Figure 4b), the received access token is a single-use access token that is randomly generated by the request vault.

Next, the game engine requests, to the storybox module that may access the digital result file, the result of the current step of the game (step 420). The request for the result of the current step of the game comprises the previously received single-use access token, a reference of the current step, the ticket token, and a reference to the digital game or to the digital game result file. In response to the request for the result of the current step of the game, the game engine receives the result (step 425). As described above, such a result is transmitted to the player and may be used to determine whether a next step of the game may be accessed (if any).

Again, the scratch tickets may be replaced by virtual tickets or game accesses.

As illustrated in Figure 4b, illustrating steps carried out by the request vault module, the request vault module generates a single-use access token (step 435) upon receiving a request for an access token (step 430), after verifying that the current step has not already been requested or played, for the physical token, or rejects the request. As described above, the single-use access token is randomly generated. It may be a random number, for example a 128 byte random number. Before transmitting the generated single-use access token, the request vault module may record the received request in a sealed chain for further audit (so that a result for the current step and the considered ticket token can no longer be requested) and records the generated single-use access token with the ticket token and the step number. Then, the current step for the considered ticket token is marked as requested and the single-use access token is transmitted to the game engine. According to other embodiments, a timestamp is used, which makes it possible to withdraw the request, for example in case of technical issues.

For the sake of illustration, the sealed chain (or block chain) is a chain of all the steps of a given game, played from a given ticket. At each step of the game, a timestamp and a reference to the step and to the ticket may be added to the chain (that is initially empty) and signed, for example using a private key of a signing process using an encryption mechanism (e.g., of the RSA type), the signature being also added to the chain after being calculated.

Upon receiving a request for verifying a single-use access token (step 440), from the storybox module, the request comprising the single-use access token to be verified, the request vault module authenticates the received single-use access token, for example by comparing the received single-use access token with the previously generated and stored single-use access token and checking that this token is not marked as 'played' and by using the sealed chain. In addition, the request vault module may check that the step of the game for which a response is requested for this ticket token has not yet been marked as played. Furthermore, it is checked that the step requested is in the correct order of the sequence of the game play, to avoid the risk of skipping a step to reveal a later stage result earlier in the game. If the received single-use access token and the step order are valid, the request vault module confirms its validity by sending a corresponding message to the storybox module (step 445).

Upon receiving an indication of use of a single-use access token (step 450), from the storybox module, for example in a message comprising the single-use access token, the request vault module recovers the received single-use access token within the previously generated and stored single-use access tokens and marks it as 'played' so that the received single-use access token cannot be used anymore. Such an indication may also be added in the sealed chain. A confirmation is then sent to the storybox module (step 455).

As illustrated in Figure 4c, illustrating steps carried out by the storybox module, the storybox module requests a validity check of a single-use access token received in a request for a result of a current step of a game, upon receiving such a request, the access token being received along with a reference to the current step, a ticket token, and a reference to the digital game or to the digital result file (steps 460 and 465). As illustrated, the request is received from the game engine and the validity check is addressed to the request vault module. In response to the validity check of the received single-use access token, the storybox module receives a confirmation of its validity or a denial (step 470). If the received single-use access token is not valid, the game engine is forewarned of an error and the algorithm stops. On the contrary, if the received single-use access token is authenticated, the storybox module reads a reference to the predetermined story corresponding to the ticket token, in the digital result file (e.g., in Table 4). According to some embodiments, this might require an additional interaction with an optional blackbox provided by the printer (or any other third party) which has generated the file and which produces, from the ticket token, a ticket key such as an index that gives access to a story within a scrambled list of stories or to any containers in which the scrambled list of stories has been copied. Once the story is obtained, the result corresponding to the current step is decoded by using a description of the story (e.g., in Table 1) (step 475). The digital result file and the description of the stories may be obtained using the received reference of the digital game and/or of the digital game. It is observed that according to some embodiments, the storybox module does not record the story.

Next, the storybox module requests, to the request vault module, the marking of the current step for the ticket token as 'played' (step 480). Upon receiving a confirmation from the request vault module that the current step for the ticket token has been marked as 'played' (step 485), the storybox module returns the result of the current step for the ticket token to the game engine (step 490), which, in turn, can reveal this result to the player.

It is observed that the flow pattern resulting from Figures 4a, 4b, and 4c provides a secure traceable interaction with the digital result file.

**Figure 5** illustrates an example of steps for generating a digital result file according to some embodiments of the disclosure.

As illustrated, a first step is directed to obtaining a digital prize structure (step 500), for example as described with reference to Table 3 in the Appendix. Next, a scrambled list of stories is generated and stored in a file (step 505). This list comprises as many stories as tickets should be printed (or as many e-tickets should be generated)), the distribution of the stories within the scrambled list of stories being the one defined in the obtained digital prize structure.

Next, in parallel or before generating the scrambled list of stories, a physical validation file (or physical prize structure) is obtained (step 510). The physical validation file, that associates ticket tokens with physical prizes, is then used to associate ticket tokens with story indexes in the scrambled list of stories per initial winning class (initial meaning the physical price won on the scratch card or winning class of the first step of the e-ticket) (step 515) so that each ticket token is assigned to a story of the scrambled list of stories in its winning class. It is observed here that according to some embodiments, the story index may be calculated from the ticket token by a blackbox module so that only known by the system setting up the digital game (or digital extension). The scrambled list of stories is then transmitted to the storybox as a digital result (step 520).

Accordingly, when a story associated with a given ticket token is to be obtained, the storybox module requests a story index to the blackbox module, by providing the ticket token to the blackbox module. Then, using the story index and the scrambled list of stories, the storybox module may identify the story corresponding to the ticket token.

Still for the sake of illustration, a digital game according to some embodiments of the disclosure may be accessed from an e-ticket, from a virtual ticket, or from any other digital game access. For example, the e-ticket, the virtual ticket, or the digital game access may comprise a validation code that makes it possible to access the digital game and to play, as described with reference to Figure 3. According to another example, the e-ticket, the virtual ticket, or the digital game access may give an access to a first part of the game, that a result makes it possible for the owner of the e-ticket, the virtual ticket, or the digital game access to access to a second part of the game and successively to other steps of the game. In such a case, the validation code that gives access to the story of the ticket is randomly determined when the game is launched.

Still for the sake of illustration and as a variant of the previous embodiments directed to the physical tickets, a story of a result file may be assigned dynamically to a physical ticket, by randomly selecting a story among the ones corresponding to the winning level of the physical ticket, that are listed in the result file and that have not been previously assigned to any physical ticket. In such a case, the result file may comprise a list of stories, each story being associated with a winning level and with an indication indicating whether the story has been assigned to a physical ticket. Such pool-based solutions also limit the variance of the game RTP and make it possible to comply with the pool structure defined in the result file.

**Figure 6** is a schematic block diagram of a computing device 600 for implementation of one or more embodiments of the disclosure. The computing device 600 may be a device such as a micro-computer, a workstation, or a light portable device. The computing device 600 comprises a communication bus 602 connected to:
- a central processing unit (CPU) 604, such as a microprocessor;
- a random access memory (RAM) 608 for storing the executable code of the method of embodiments of the disclosure as well as the registers adapted to record variables and parameters necessary for implementing the method for encapsulating, indexing, de-encapsulating, and/or accessing data, the memory capacity thereof can be expanded by an optional RAM connected to an expansion port for example;
- a read only memory (ROM) 606 for storing computer programs for implementing embodiments of the disclosure;
- a network interface 612 that is, in turn, typically connected to a communication network 614 over which digital data to be processed are transmitted or received. The network interface 612 can be a single network interface, or composed of a set of different network interfaces (for instance wired and wireless interfaces, or different kinds of wired or wireless interfaces). Data are written to the network interface for transmission or are read from the network interface for reception under the control of the software application running in the CPU 604;
- a user interface (UI) 616 for receiving inputs from a user or to display information to a user;
- a hard disk (HD) 610; and/or
- an I/O module 618 for receiving/sending data from/to external devices such as a video source or display.

The executable code may be stored either in read only memory 606, on the hard disk 610 or on a removable digital medium for example such as a disk. According to a variant, the executable code of the programs can be received by means of a communication network, via the network interface 612, in order to be stored in one of the storage means of the communication device 600, such as the hard disk 610, before being executed.

The central processing unit 604 is adapted to control and direct the execution of the instructions or portions of software code of the program or programs according to embodiments of the disclosure, which instructions are stored in one of the aforementioned storage means. After powering on, the CPU 604 is capable of executing instructions from main RAM memory 608 relating to a software application after those instructions have been loaded from the program ROM 606 or the hard-disc (HD) 610 for example. Such a software application, when executed by the CPU 604, causes the steps of the flowcharts shown in the previous figures to be performed.

In this embodiment, the apparatus is a programmable apparatus which uses software to implement the method of the disclosure. However, alternatively, the method of the present disclosure may be implemented in hardware (for example, in the form of an Application Specific Integrated Circuit or ASIC).

Although the present disclosure has been described herein above with reference to specific embodiments, the disclosure is not limited to the specific embodiments, and modifications will be apparent to a skilled person in the art which lie within the scope of the disclosure.

Many further modifications and variations will suggest themselves to those versed in the art upon making reference to the foregoing illustrative embodiments, which are given by way of example only and which are not intended to limit the scope of the disclosure, that being determined solely by the appended claims. In particular, the different features from different embodiments may be interchanged, where appropriate.

Each of the embodiments of the disclosure described above can be implemented solely or as a combination of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

### APPENDIX

**Table 1: stories**

| ***story*** | ***outcome*** |
|---|---|
| E | loser at step 1 |
| D | loser at step 2 (winner at step 1) |
| c | loser at step 3 (winner at steps 1 and 2) |
| B | loser at step 4 (winner at steps 1, 2, and 3) |
| A | winner at steps 1, 2, 3, and 4 |

**Table 2: paper prize structure**

| ***class*** | ***#ticket*** | ***prize*** |
|---|---|---|
| 1 | 2 | 50.000 € |
| 2 | 32 | 1.000 € |
| 3 | 496 | 100 € |
| 4 | 7.296 | 50 € |
| 5 | 40.000 | 20 € |
| 6 | 264.992 | 10 € |
| 7 | 458.992 | 5 € |

**Table 3. digital prize structure**

| ***class*** | ***story*** | ***factor*** | ***#story*** | ***chance*** | ***prize*** |
|---|---|---|---|---|---|
| 1 | *no digital play* | | | | |
| 2 | A | 16 | 2 | 6,25 % | 16.000 € |
| | B | 8 | 2 | 6,25 % | 8.000 € |
| | C | 4 | 4 | 12,50 % | 4.000 € |
| | D | 2 | 8 | 25,00 % | 2.000 € |
| | E | 0 | 16 | 50.00 % | - |
| 3 | A | 16 | 31 | 6,25 % | 1.600 € |
| | B | 8 | 31 | 6,25 % | 800 € |
| | C | 4 | 62 | 12,50% | 400 € |
| | D | 2 | 124 | 25,00 % | 200 € |
| | E | 0 | 248 | 50.00 % | - |
| 4 | A | 16 | 456 | 6,25 % | 800 € |
| | B | 8 | 456 | 6,25 % | 400 € |
| | C | 4 | 912 | 12,50% | 200 € |
| | D | 2 | 1.824 | 25,00 % | 100 € |
| | E | 0 | 3.648 | 50.00 % | - |
| 5 | A | 16 | 2.500 | 6,25 % | 320 € |
| | B | 8 | 2.500 | 6,25 % | 160 € |
| | C | 4 | 5.000 | 12,50 % | 80 € |
| | D | 2 | 10.000 | 25,00 % | 40 € |
| | E | 0 | 20.000 | 50.00 % | - |
| 6 | A | 16 | 16.562 | 6,25 % | 160 € |
| | B | 8 | 16.562 | 6,25 % | 80 € |
| | C | 4 | 33.124 | 12,50% | 40 € |
| | D | 2 | 66.248 | 25,00 % | 20 € |
| | E | 0 | 132.496 | 50.00 % | - |
| 7 | A | 16 | 28.687 | 6,25 % | 80 € |
| | B | 8 | 28.687 | 6,25 % | 40 € |
| | C | 4 | 57.374 | 12,50 % | 20 € |
| | D | 2 | 114.748 | 25,00 % | 10 € |
| | E | 0 | 229.496 | 50.00 % | - |

**Table 4: association of ticket identifiers with stories**

| ***ticket ID*** | ***story*** |
|---|---|
| A0000001 | D |
| A0000002 | B |
| ... | ... |
| R0401087 | B |
| ... | ... |
| R9900451 | A |

## Claims

1. A method for a computer game wherein a result of a current step of the computer game is determined as a function of a predetermined game behavior, the predetermined game behavior being unknown from a player at the time of playing at the current step, the method comprising, in an authentication module,
receiving (430), from a game engine module, an access token request for accessing a result of the current step, the access token request comprising a token of a game access and a reference to the current step;
securely storing the token of the game access and the reference to the current step;
generating and transmitting (435) a single-use access token, the generated single-use access token being stored in relation to the stored token of the game access and reference to the current step; and
upon request, from a result management module, different from the game engine module and from the authentication module, confirming (445) the validity of the single-use access token and marking securely the stored token of the game access and reference to the current step as played.

2. The method of claim 1, wherein the computer game is a multi-step computer game, the result of the current step being a right to access a next step of the multi-step computer game.

3. The method of claim 1 or claim 2, wherein the token of the game access is a validation code of a scratch ticket.

4. The method of any one of claims 1 to 3, wherein securely storing the token of the game access and the reference to the current step comprises appending the token of the game access and the reference to the current step to a signed chain.

5. A method for a computer game wherein a result of a current step of the computer game is determined as a function of a predetermined game behavior, the predetermined game behavior being unknown from a player at the time of playing at the current step, the method comprising, in a result management module,
receiving (460), from a game engine module, a request for the result of the current step, the received request comprising a single-use access token;
requesting (465) an authentication module to verify the validity of the single-use access token, the authentication module being different from the game engine module and from the result management module, and
if the single-use access token is valid, determining (475) and transmitting (490) the result of the current step to the game engine module.

6. The method of claim 5, wherein the request for the result of the current step further comprises a token of the game access, the method further comprising obtaining a predetermined game behavior associated with the token of the game access.

7. The method of claim 6, wherein the predetermined game behavior is obtained from a result file associating predetermined game behaviors with tokens of game accesses.

8. The method of claim 6, further comprising obtaining an index corresponding to the ticket token, wherein the predetermined game behavior is obtained from a scrambled list of behaviors, using the obtained index.

9. The method of claim 5, further comprising determining whether a game behavior has been assigned to the ticket token and, if not any game behavior has been assigned to the ticket token, obtaining a game behavior of a predetermined list of game behaviors and assigning the obtained game behavior to the ticket token.

10. The method of claim 9, wherein the ticket token is associated with a winning level and wherein the predetermined list of game behaviors is selected as a function of the winning level.

11. The method of any one of claims 6 to 10, wherein the request for the result of the current step further comprises a reference to the current step, determining the result of the current step comprising determining the result of the current step as a function of the obtained game behavior and of the current step.

12. The method of any one of claims 5 to 11, wherein the computer game is a multi-step computer game, the result of the current step being a right to access a next step of the multi-step computer game.

13. A method for a computer game wherein a result of a current step of the computer game is determined as a function of a predetermined game behavior, the predetermined game behavior being unknown from a player at the time of playing at the current step, the method comprising, in a game engine module,
requesting (415), to an authentication module, an access token for accessing a result of the current step, the access token request comprising a token of a game access and a reference to the current step;
in response to the access token request, receiving (415) a single-use access token;
requesting (420), to a result management module different from the authentication module and from the game engine module, the result of the current step, the request for the result comprising the single-use access token; and
in response to requesting the result, receiving (425) the result of the current step from the result management module.

14. A method for generating a computer game result file for a computer game accessible to players through game accesses, the method comprising,
obtaining (500) a digital prize structure description, the digital prize structure description comprising a description of a distribution of winnings of the computer game according to game accesses;
obtaining tokens of game accesses; and
generating (515), based on the received digital prize structure description, a file associating predetermined game behaviors with the tokens of the game accesses or with items of information associated with the tokens of the game accesses.

15. A computer program product for a programmable apparatus, the computer program product comprising a sequence of instructions for implementing each of the steps of the method according to any one of claims 1 to 14 when loaded into and executed by the programmable apparatus.

16. A device comprising a processing unit configured for carrying out each of the steps of the method according to any one of claims 1 to 14.
